# EUROPEAN PATENT APPLICATION

(11) **EP 1 699 158 A1**
(43) Date of publication of application: **06.09.2006**
(21) Application number: 05290473.7
(22) Date of filing: 02.03.2005
(51) Int. Cl.: H04L 1/18

(54) **A method for selection of the appropriate HARQ retransmission scheme for data transmission, a base station and a program therefor**

(71) Applicant: Evolium S.A.S., 75008 Paris (FR)
(72) Inventor: Braun, Volker, Dr.-Ing., 710178 Stuttgart (DE)
(74) Representative: Rausch, Gabriele

(57) **Abstract**

The invention concerns a method for selection of the appropriate HARQ (Hybrid Automatic Repetition Request) retransmission scheme within a base station for data transmission over a communication network to a terminal, whereby said selection is performed repeatedly during data transmission by means of at least one parameter that defines the data transmission.

## Description

The invention relates to a method for selection of the appropriate Hybrid Automatic Repetition Request (HARQ) retransmission scheme for data transmission according to the preamble of claim 1, a base station according to the preamble of claim 8 and a program module according to the preamble of claim 10.

High Speed Downlink Packet Access (HSDPA) is an extension of the Universal Mobile Telecommunications System (UMTS) standard to achieve higher spectral efficiency for packet data in downlink, i.e. from the base station to the mobile station. HSDPA uses adaptive modulation, coding and a packet scheduler located in the base station, called Node B in UMTS, to optimize throughput. The selection of an appropriate modulation and coding scheme by the Node B scheduler is done with the aid of a Channel Quality Indicator (CQI) reported by the terminals, called User Equipments (UEs) in UMTS.

HSDPA further uses a HARQ retransmission scheme on the physical layer in order to keep near zero the rate of costly retransmissions on higher layers like on the Radio Link Control (RLC) layer or on the Transmission Control Protocol (TCP) layer. The UE applies a Cyclic Redundancy Code (CRC) check for a received data packet, like e.g. a transport block, and acknowledges the result per ACK/NACK message to the Node B. After receiving a NACK for a transport block, the Node B can choose to retransmit the transport block. In such a case, the UE applies coherent soft combining of the retransmitted transport block with the initial transport block, in order to obtain best possible error rate performance.

HSDPA allows for both Chase Combining and Incremental Redundancy as HARQ retransmission schemes.

With Chase Combining, a retransmitted transport block contains exactly the same set of coded bits, i.e. the same puncturing pattern, as used for the initial transmission of the transport block.

With Incremental Redundancy, a retransmitted transport block may contain different coded bits, e.g. by using a different puncturing pattern, as used for the initial transmission of the transport block. Then during soft combining, with every retransmission additional parity bits are received by the UE, which in turn decrease the code rate, but also increase the error correction capability of the Error Correction Coding (ECC) scheme.

Chase Combining shall preferably be applied in case of good channel quality in order to achieve high peak data rates, and in case of poor channel quality, Incremental Redundancy is preferable due to improved error rate performance, i.e. data throughput for a given signal to noise and interference ratio.

Nowadays, the choice which HARQ retransmission scheme is used is performed only at the beginning of a transmission and it is therefore not possible to react on changing transmission conditions during the transmission in order to achieve the appropriate choice of either a higher peak data rate or a better error rate performance.

The object of the invention is to propose a method to react on changing transmission conditions during transmission in a base station in order to chose the appropriate HARQ retransmission scheme Chase Combining or Incremental Redundancy, or in general to chose either HARQ retransmission scheme A or HARQ retransmission scheme B, where we assume schemes A and B to be two retransmission schemes similar to the above described Chase Combining and Incremental Redundancy, i.e. scheme A e.g. always requires less HARQ buffer for a certain data rate and thus often enables higher peak data rate for a given HARQ buffer size, whereas scheme B e.g. has better error rate performance.

This object is achieved by a method according to the teaching of claim 1, a base station according to the teaching of claim 8 and a program module according to the teaching of claim 10.

The main idea of the invention is, that at least once, when the initial transmission or a retransmission of a transport block is prepared, a selection of the appropriate HARQ retransmission scheme is performed by means of at least one parameter that defines the data transmission like e.g. the radio resources (i.e. the available transmission power and the channels defined by frequency or code), the Channel Quality Indicator (CQI), the configured HARQ buffer, the UE capability, the so-called Transport Format Resource Combination (TFRC) set and/or the power offsets.

In a more elaborate embodiment of the invention, a selection function like e.g. the so-called TFRC selection function for a HARQ retransmission scheme A is executed in the base station and for a given parameter list comprising the above mentioned parameters that define the data transmission, the size of the transport block corresponding to the HARQ retransmission scheme A is determined.

Then for a given transport block size determined by means of the selection function for the HARQ retransmission scheme A, the minimum HARQ buffer size required for the alternative HARQ retransmission scheme B is determined by means of e.g. table look-up in case the correlation between the transport block size and the minimum HARQ buffer size required for the alternative HARQ retransmission scheme B has already been determined and stored prior to the beginning of the transmission.

If the minimum HARQ buffer size required for the HARQ retransmission scheme B is bigger than the size of the configured HARQ buffer, i.e. the buffer-size that is available for retransmission, then HARQ retransmission scheme A is selected as retransmission scheme for the transport block. Otherwise HARQ retransmission scheme B will be selected as retransmission scheme for the transport block.

Further developments of the invention can be gathered from the dependent claims and the following description.

In the following the invention will be explained further making reference to the attached drawing.

A communication network in which the invention can be implemented comprises a base station for data transmission over said communication network and terminals.

The base station is connected to the terminals through a wireline or wireless connection and the base station can be further connected by means of a core network to control devices and via gateways to devices like e.g. terminals or servers located in further networks like e.g. the Internet or a mobile or a fixed network. Additional base stations that can be comprised in the communication network may also be connected to each other and/or to said base station via the core network.

The terminals are customary terminals for mobile or fixed networks like cell phones for UMTS or ISDN telephones (ISDN = Integrated Services Digital Network).

In a preferred embodiment, the terminals are cell phones for UMTS that are capable of receiving HSDPA data.

The base station comprises the functionality of a transceiver for sending data to and receiving data from a terminal and the core network. Furthermore, the base station comprises means for error handling like e.g. error coding or retransmission according to a HARQ retransmission scheme. According to the invention, the base station additionally comprises means for repeated selection of the appropriate HARQ retransmission scheme during data transmission by means of at least one parameter that defines the data transmission.

In a further embodiment, the base station comprises means for selection of said appropriate HARQ retransmission scheme by means of determining the transport block size for said HARQ retransmission scheme using a selection function that depends on said at least one parameter that defines the data transmission.

In a further embodiment, said selection function is the so-called Transport Format Resource Combination (TFRC) selection function.

In a preferred embodiment, the base station is a Node B for HSDPA in UMTS.

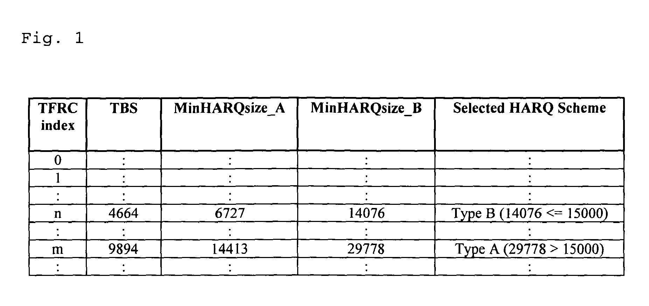

In the following, by way of example the method according to the invention is described in detail making reference to fig. 1.

In the example described below, the communication network is a UMTS network, the base station therefor is a so-called Node B and the terminals are so-called User Equipments (UE).

The HSDPA feature is implemented within the UMTS network, i.e. the Node B is capable of sending HSDPA data and the User Equipments are capable of receiving such HSDPA data.

As already described above, HSDPA allows for Chase Combining and Incremental Redundancy as HARQ retransmission schemes and these two schemes are implemented within the Node B and the User Equipments.

With either of the two retransmission schemes, it is possible to adapt the number of codes, the modulation scheme, i.e. Quaternary Phase Shift Keying (QPSK) or 16 Quadrature Amplitude Modulation (16QAM), and the transmission power between retransmissions. It can be assumed that Incremental Redundancy will typically outperform Chase Combining in terms of error rate performance, whereas Chase Combining provides for higher peak data rates.

To implement these HARQ retransmission schemes, the Node B transceiver baseband processing uses the following building blocks described in detail in 3GPP TS 25.212 standard. After applying Cyclic Redundancy Check (CRC) attachment and Turbo encoding with a fixed code rate of 1/3 to a transport block that has to be sent from the Node B to a User Equipment, the first Rate Matching stage reduces by puncturing the coded transport block size to fit into the HARQ buffer. The second rate matching stage reduces by puncturing or increases by using repetition the coded block size to fit the physical channel resources given by spreading factor, number of codes and modulation scheme. The size of the HARQ buffer is configured in a semi-static way, i.e. the HARQ buffer size configured in Node B matches the HARQ buffer size that is available in the UE in order to perform the soft combining.

The size of the HARQ buffer has to be considered in the scheduling decisions, i.e. the HARQ buffer size will pose a limit to the maximum possible transport block size that can be used for a packet transmission. For a given HARQ buffer size, typically the maximum transport block size, i.e. the maximum peak data rate that can be transmitted is larger for Chase Combining than for Incremental Redundancy, or in other words, for a given transport block size, the minimum required HARQ buffer size for Chase Combining, i.e. HARQ retransmission scheme A is typically less than the minimum required HARQ buffer size for Incremental Redundancy, i.e. HARQ retransmission scheme B. In this example, we assume that an effective code rate (Reff) of 0.7 is used, which is a typical value obtained by puncturing a Turbo code with a rate of 1/3 as used for HSDPA.
- With Chase Combining, the code rate can be 0.7 after the first Rate Matching stage, and the second Rate Matching stage can be transparent. So, for a given transport block size, the HARQ buffer size must be greater than or equal to the quotient of the transport block size divided by the effective code rate which delivers as result 1.43 times the transport block size.

With Incremental Redundancy, there must be a possibility to change the effective puncturing pattern between packet transmissions. This is achieved by using a different puncturing in the second Rate Matching stage, i.e., the first Rate Matching stage must leave enough parity bits. In the extreme case, all parity bits are available in second Rate Matching stage and in this case the HARQ buffer size must be greater than or equal to 3 times the transport block size.

From this example, we can conclude that Chase Combining shall preferably be applied in case of good channel quality in order to achieve high peak data rates, and in case of poor channel quality, Incremental Redundancy is preferable due to improved error rate performance.

There are many parameters that influence the choice of the optimum HARQ retransmission scheme like e.g. the radio resources (power and codes), the channel quality determined by the Channel Quality Indicator (CQI), the configured HARQ buffer size, which is often equal to the total UE soft buffer divided by the number of HARQ processes (typically a number between 2 and 6), the UE capability, which determines the available soft buffer of the UE, the power offsets like e.g. the Measurement Power Offset (MPO, cf. 3GPP TS 25.214) and the set of possible transport format resource combinations (TFRC) comprising the transport block size, the number of channelisation codes, the modulation scheme and the transmit power required to achieve a target error rate with the TFRC.

In one embodiment of the invention, at least one of said parameters that influence the choice of the optimum HARQ retransmission scheme is used to repeatedly select the appropriate HARQ retransmission scheme during data transmission. This can be done either before the initial transmission of a transport block, and/or before at least one retransmission of this transport block. The selection can be performed more often in case of fast changing conditions of the data transmission.

These parameters are also used by the so-called TFRC selection function to select a suitable TFRC for an initial transmission or for a retransmission of a transport block using the same transport block size.

If an initial transmission of a transport block from the Node B to a User Equipment is erroneous, then the User Equipment requests retransmission of the transport block from the Node B e.g. by sending a NACK. Before the initial transmission of the transport block, the Transport Format Resource Combination (TFRC) selection function for the HARQ retransmission scheme Chase Combining is run in the Node B and the transport block size is obtained as a result of this selection for a given parameter list comprising radio resources, Channel Quality Indicator (CQI), configured HARQ buffer, UE capability, TFRC set, power offsets and the like.

In another embodiment, the Transport Format Resource Combination (TFRC) selection function for the HARQ retransmission scheme Chase Combining is run in the Node B before at least one retransmission of the transport block to have the appropriate choice of the HARQ retransmission scheme even in case of fast changing conditions of the data transmission.

The minimum HARQ buffer size required for the alternative HARQ retransmission scheme Incremental Redundancy can be calculated by means of the above mentioned correlation between transport block size and the HARQ buffer size.

For both Chase Combining and Incremental Redundancy, the transport block size as obtained by the TFRC selection function for the HARQ retransmission scheme Chase Combining can be used in order to format or assemble the transport block. This is possible, as the first rate matching stage uses as inputs the transport block and the configured HARQ buffer size, i.e. the inputs for the first Rate Matching stage for Chase Combining and Incremental Redundancy are identical.

In a preferred embodiment, for a given transport block size, the minimum HARQ buffer size required for the alternative HARQ retransmission scheme Incremental Redundancy is determined e.g. by table look-up which can be performed faster than a calculation of the minimum HARQ buffer size. For that purpose, the correlation between transport block size and the minimum HARQ buffer size for Incremental Redundancy has been calculated and stored in a table in the Node B before the beginning of the transmission.

In another embodiment, the HARQ retransmission scheme Incremental Redundancy is used to determine the transport block size by the TFRC selection function, and the minimum HARQ buffer size required for the alternative HARQ retransmission scheme Chase Combining is determined e.g. by table look-up analogue to the above described procedure.

In fig. 1, such a table indicating the correlation between transport block size and the minimum HARQ buffer size is depicted. In the first column, the index of the Transport Format Resource Combination TFRC is given, in the second column, the transport block size TBS in bits corresponding to the TFRC index is given, in the third column, the minimum HARQ buffer size minHarqSize_A in bits needed for the transmission and retransmission of a transport block with the HARQ retransmission scheme Chase Combining is given, in the fourth column, the minimum HARQ buffer size minHarqSize_B in bits needed for the transmission and retransmission of a transport block with the HARQ retransmission scheme Incremental Redundancy is given and in the fifth column, the HARQ retransmission scheme that is selected according to a selection rule that is described below is given.

The selection rule in this example according to which the HARQ retransmission scheme for the retransmission is selected consists in, that if the minimum HARQ buffer size minHarqSize_B needed for the transmission and retransmission of a transport block with the HARQ retransmission scheme Incremental Redundancy is bigger than the configured HARQ buffer size, then the HARQ retransmission scheme Chase Combining is selected, otherwise the HARQ retransmission scheme Incremental Redundancy is selected. As mentioned above, this makes sense as Incremental Redundancy shows the better error performance compared with Chase Combining and shall therefore be used whenever there is enough configured HARQ buffer. The HARQ retransmission scheme selected in this manner is used for the retransmissions of the transport block TBS.

In the example depicted in fig.1, the Transport Format Resource Combination TFRC with the index n comprises a transport block size TBS of 4664 bits. Out of the transport block size TBS, which is obtained by means of the TFRC selection function for Chase Combining, the required minimum HARQ buffer size for Chase Combining minHarqSize_A and Incremental Redundancy min-HarqSize_B is determined. The size of the configured HARQ buffer in the example is 15000 bits, and as the minimum HARQ buffer size for Incremental Redundancy minHarqSize_B is 14076 bits and therefore smaller than the size of the configured HARQ buffer, Incremental Redundancy is selected as HARQ retransmission scheme. However, in case of the Transport Format Resource Combination TFRC with the index m, the minimum HARQ buffer size for Incremental Redundancy minHarqSize_B is 29778 bits and therefore bigger than the size of the configured HARQ buffer, so that Chase Combining is selected as HARQ retransmission scheme.

Of course, other selection rules according to which the HARQ retransmission scheme for the retransmission is selected by means of the transport block size are possible, like e.g. a simple comparison of the transport block size with a threshold value.

The above mentioned Transport Format Resource Combination (TFRC) selection function is just an example for any kind of selection function that depends on at least one parameter that defines the data transmission for selection of the appropriate Hybrid Automatic Repetition Request (HARQ) retransmission scheme by means of determining the transport block size.

The above mentioned HARQ retransmission schemes Chase Combining and Incremental Redundancy are also only examples for any kind of HARQ retransmission schemes that can be selected according to at least one parameter that defines the data transmission.

The above described method for selection of the appropriate HARQ retransmission scheme is not restricted to UMTS systems, but can also be performed in other communication networks, like e.g. in WLAN networks (WLAN = Wireless Local Area Network) using OFDM transmission (OFDM = Orthogonal Frequency Division Multiplexing).

## Claims

1. A method for selection of the appropriate HARQ (Hybrid Automatic Repetition Request) retransmission scheme within a base station for data transmission over a communication network to a terminal, **characterized in, that** said selection is performed repeatedly during data transmission by means of at least one parameter that defines the data transmission.

2. A method according to claim 1, **characterized in, that** said appropriate HARQ retransmission scheme is selected by means of determining the transport block size (TBS) for said HARQ retransmission scheme using a selection function that depends on said at least one parameter that defines the data transmission.

3. A method according to claim 2, **characterized in, that** said selection function is the Transport Format Resource Combination selection function.

4. A method according to claim 2 or 3, **characterized in, that** the determined transport block size (TBS) for a first HARQ retransmission scheme is used to directly determine the required minimum HARQ buffer size for a second HARQ retransmission scheme (minHarqSize_B).

5. A method according to claim 2 or 3, **characterized in, that** a first HARQ retransmission scheme is chosen for retransmission of the transport block if the determined minimum HARQ buffer size for a second HARQ retransmission scheme is bigger than the size of a preconfigured HARQ buffer, and if the determined minimum HARQ buffer size for the second HARQ retransmission scheme (minHarqSize_B) is smaller than the size of the preconfigured HARQ buffer, the second HARQ retransmission scheme is chosen for retransmission of the transport block.

6. A method according to claim 1, **characterized in, that** said data transmission is accomplished by means of High Speed Downlink Packet Access used in Universal Mobile Telecommunication System.

7. A method according to claim 4, **characterized in, that** said first HARQ retransmission scheme is Chase Combining and said second HARQ retransmission scheme is Incremental Redundancy.

8. A base station for data transmission over a communication network to a terminal, **characterized in, that** the base station comprises means for repeated selection of the appropriate HARQ retransmission scheme during data transmission by means of at least one parameter that defines the data transmission.

9. A base station according to claim 8, **characterized in, that** the base station comprises means for selection of said appropriate HARQ retransmission scheme by means of determining the transport block size for said HARQ retransmission scheme using a selection function that depends on said at least one parameter that defines the data transmission.

10. A program module to be executed in a base station for selecting the appropriate HARQ retransmission scheme within a base station for data transmission over a communication network to a terminal, **characterized in, that** said selection is performed repeatedly during data transmission by means of at least one parameter that defines the data transmission.

11. A program module according to claim 10, **characterized in, that** said appropriate HARQ retransmission scheme is selected by means of determining the transport block size for said HARQ retransmission scheme using a selection function that depends on said at least one parameter that defines the data transmission.

## Amended claims

### Amended claims in accordance with Rule 86(2) EPC.

**1.** A method for selection of the appropriate HARQ (Hybrid Automatic Repetition Request) retransmission scheme within a base station for data transmission over a communication network to a terminal, whereby said selection is performed repeatedly during data transmission by means of at least one parameter that defines the data transmission **characterized in, that** said appropriate HARQ retransmission scheme is selected by means of determining the transport block size (TBS) for said HARQ retransmission scheme using a selection function that depends on said at least one parameter that defines the data transmission, and by means of using the determined transport block size (TBS) to directly determine the required minimum HARQ buffer size for a HARQ retransmission scheme.

**2.** A method according to claim 1, **characterized in, that** said selection function is the Transport Format Resource Combination selection function.

**3.** A method according to claim 1 or 2, **characterized in, that** the determined transport block size (TBS) for a first HARQ retransmission scheme is used to directly determine the required minimum HARQ buffer size for a second HARQ retransmission scheme (minHarqSize_B).

**4.** A method according to claim 1 or 2, **characterized in, that** a first HARQ retransmission scheme is chosen for retransmission of the transport block if the determined minimum HARQ buffer size for a second HARQ retransmission scheme is bigger than the size of a preconfigured HARQ buffer, and if the determined minimum HARQ buffer size for the second HARQ retransmission scheme (minHarqSize_B) is smaller than the size of the pracanfigurad HARQ buffer, the second HARQ retransmission scheme is chosen for retransmission of the transport block.

**5.** A method according to claim 1, **characterized in, that** said data transmission is accomplished by means of High Speed Downlink Packet Access used in Universal Mobile Telecommunication System.

**6.** A method according to claim 3, **characterized in, that** said first HARQ retransmission scheme is Chase Combining and said second HARQ retransmission scheme is Incremental Redundancy.

**7.** A base station for data transmission over a communication network to a terminal whereby the base station comprises means for repeated selection of the appropriate HARQ retransmission scheme during data transmission by means of at least one parameter that defines the data transmission, **characterized in, that** the base station comprises means for selecting said appropriate HARQ retransmission scheme by means of determining the transport block size (TBS) for said HARQ retransmission scheme using a selection function that depends on said at least one parameter that defines the data transmission, and by means of using the determined transport block size (TBS) to directly determine the required minimum HARQ buffer size for a HARQ retransmission scheme.

**8.** A base station according to claim 7, **characterized in, that** the base station comprises means for selection of said appropriate HARQ retransmission scheme by means of determining the transport block size for said HARQ retransmission scheme using a selection function that depends on said at least one parameter that defines the data transmission.

**9.** A program module to be executed in a base station for selecting the appropriate HARQ retransmission scheme within a base station for data transmission over a communication network to a terminal, whereby said selection is performed repeatedly during data transmission by means of at least one parameter that defines the data transmission **characterized in, that** said appropriate HARQ retransmission scheme is selected by means of determining the transport block size (TBS) for said HARQ retransmission scheme using a selection function that depends on said at least one parameter that defines the data transmission, and by means of using the determined transport block size (TBS) to directly determine the required minimum HARQ buffer size for a HARQ retransmission scheme.

**10.** A program module according to claim 9, **characterized in, that** said appropriate HARQ retransmission scheme is selected by means of determining the transport block size for said HARQ retransmission scheme using a selection function that depends on said at least one parameter that defines the data transmission.
